# FASCICULE DE BREVET EUROPEEN

(11) **EP 0 513 235 B1**
(45) Date de publication et mention de la délivrance du brevet: **13.10.1993**
(21) Numéro de dépôt: 91905202.7
(22) Date de dépôt: 11.02.1991
(51) Int. Cl.: B65B 9/13, B65B 9/14

(54) **PROCEDE DE REALISATION D'ELEMENTS GONFLABLES DE TAILLE VARIABLE POUR LE CALAGE DE PROTECTION D'OBJETS DANS UN CONTENANT ET MACHINE POUR SA MISE EN OEUVRE**
VERFAHREN UND VORRICHTUNG ZUR HERSTELLUNG VON AUFBLASBAREN TEILEN VERSCHIEDENER GRÖSSEN ZUM IMMOBILISATIONSSCHUTZ VON GEGENSTÄNDEN IN EINEM CONTAINER
METHOD AND MACHINE FOR PRODUCING VARIABLE-SIZED INFLATABLE ELEMENTS FOR THE PROTECTIVE IMMOBILIZATION OF OBJECTS IN A CONTAINER

(30) Priorité: 09.02.1990 FR 9001501
(43) Date de publication de la demande: 19.11.1992
(73) Titulaire: PLATEAU, Bernard, 14000 Caen (FR)
(72) Inventeur: PLATEAU, Bernard, 14000 Caen (FR)
(74) Mandataire: Dronne, Guy
(86) Numéro de dépôt international: FR9100100
(87) Numéro de publication internationale: WO9112175

(56) Documents cités:
- EP-A- 0 315 882
- WO-A-86/03163
- DE-A- 3 601 520
- FR-A- 1 391 736
- FR-E- 85 263

## Description

La présente invention concerne la création de coussins d'air de taille variable destinés au calage et à la protection d'objets divers en vue de leur stockage et de leur transport, par une machine automatisée produisant les coussins d'air suivant chaque besoin spécifique. Le calage et la protection traditionnelles sont effectués à l'aide de particules ou de coques moulées en polyuréthane, de mousse expansée ou non, de paille, de débris de carton et de papier, de bulles d'air de formes définies qui ont pour inconvénient d'occuper avant toute utilisation leur propre volume, nécessitant matrices de fabrication, volume de stockage, transport encombrant, créant une pollution résiduelle et un manque de souplesse et d'efficacité dans leur emploi. Chaque procédé ne couvrant qu'une partie des besoins existants en créant résiduellement par eux-mêmes les inconvénients soulignés ci-dessus. Le problème est de répondre globalement aux besoins de protection maximale et de calage, par le moyen disponible sur le lieu d'utilisation, sans stockage important et sans source de résidus au déballage.

Le document EP-A-0 315 882 décrit un procédé d'emballage de produits individualisés consistant à souder une extrémité d'une gaine, à provoquer l'écartement des parois de la gaine à ménager une ouverture dans une des parois et à introduire les produits dans le "sac" ainsi réalisé. Cependant ce document ne concerne pas la réalisation de "coussins". La présente invention permet d'apporter une solution pratique et globalement satisfaisante.

La présente invention vise un procédé de réalisation d'éléments gonflables appelés coussins destinés au calage de protection d'objets divers et au remplissage d'espaces contenus par rapport à un contenant, caractérisé en ce qu'il consiste : à prendre une gaine souple en matière plastique étanche soudable d'une largeur supérieure au besoin pour tenir compte de la modification due au gonflement, à souder l'extrémité libre aval de ladite gaine, à placer la longueur désirée de gaine entre au moins deux moyens de limitation et de contrôle de remplissage, à pratiquer une ouverture dans une des deux faces de la gaine au-delà de la longueur utile définie du coussin, sur au moins une partie de la largeur, à introduire de l'air par ladite ouverture pour remplir à son pourcentage prévu le coussin, tout en obturant temporairement la gaine en amont de ladite ouverture à l'aide de moyens de rétention, à réaliser une soudure étanche de fermeture en aval de ladite ouverture et à réaliser une prédécoupe au moins partielle dans la zone de ladite ouverture permettant la séparation aisée du coussin réalisé ou du dernier coussin d'un chapelet.

Selon d'autres caractéristiques, le procédé consiste en outre à effectuer une soudure simultanée à la fin d'un premier coussin et au début du suivant par une double soudure située de part et d'autre de l'ouverture de remplissage et de prédécoupe, à introduire, préalablement à la première soudure, de l'air dans ladite gaine, à maintenir cette réserve d'air ainsi créée dans la gaine par un moyen de rétention situé en amont de la zone d'ouverture de coupe et de soudure, à reconstituer la réserve d'air à chaque gonflement d'un nouveau coussin facilitant ainsi la coupe d'une seule des parois de la gaine, l'envoi d'air étant réalisé conjointement avec le remplissage d'air de chaque coussin, le moyen formant rétention étant ouvert à ce moment pour permettre l'entrée de l'air, le maintien de l'air de réserve dans la gaine étant assuré par le même moyen de rétention, situé en amont de la zone de coupe qui se referme dès que l'air est introduit.

Selon une autre caractéristique, en effectuant à l'extrémité de la gaine la première soudure parallèlement à la largeur de la gaine et dans le plan de ladite gaine, et en effectuant à la longueur choisie la deuixème soudure à angle droit par rapport au plan initial contenant la première soudure de la gaine, on forme ainsi un coussin de forme tétraédrique du genre "Berlingot", grâce aux deux soudures qui sont faites à 90 degrés l'une par rapport à l'autre.

Selon une autre caractéristique, en effectuant une soudure double avec, entre elles, un emplacement de prédécoupe, réalisable dans le même temps que les soudures au milieu d'un coussin déjà formé, dont le coefficient de remplissage aura été réduit pour tenir compte de la réalisation de ladite double soudure qui est faite à angle droit par rapport au plans des soudures du coussin d'origine, on obtient deux coussins de forme "Berlingot" qui sont sensiblement de moitié de la taille du coussin d'origine.

Ainsi, selon l'invention, l'utilisateur peut choisir la forme, la longueur, la largeur, le pourcentage de remplissage pour obtenir le coussin ou la série de coussins qui lui sont nécessaires. Les coussins de forme tétraédique/"Berlingot" sont très utiles pour le remplissage d'angle d'un contenant et le calage d'objets de forme particulière. Les chapelets permettent une protection totale d'un objet en l'entourant sur toutes ses faces parallèles et en évitant la mobilité des coussins les uns par rapport aux autres.

Ainsi ces coussins sont d'une utilisation propre et très efficace, les chocs étant répartis sur la surface totale du coussin. Le procédé est propre puisqu'il n'y a pas de stock développé préalable, et que, lors du déballage, il suffit de percer le ou les coussins qui ne laissent que le résidu gaine jetable ou recyclable et non un volume définitif. L'avantage de ce procédé est qu'il est applicable à tout objet à protéger et est immédiatement disponible.

L'invention vise également une machine permettant l'obtention du ou des coussins selon le procédé qui vient d'être décrit, comportant des moyens de déroulement et d'entraînement d'un rouleau de gaine , des moyens de soudure de la gaine à son extrémité libre aval, des moyens de coupe de la gaine et des moyens d'introduction d'air dans la gaine, caractérisée en ce qu'elle comporte en outre des moyens permettant de réaliser une ouverture sur l'une des faces de la gaine, reliés auxdits moyens d'introduction d'air, dans ladite gaine, par ladite ouverture, des moyens transversalement déplaçables pouvant délimiter un volume servant à la limitation de remplissage disposés en aval des moyens de réalisation d'ouverture et de remplissage et des moyens de rétention pour obturer temporairement ladite gaine en amont de ladite ouverture.

Selon d'autres caractéristiques, la machine comporte en outre en amont des barres de soudure des moyens de rétention d'une réserve d'air, tels qu'au moins un rouleau, reliés à des moyens d'amenée en appui sur la gaine entre le moment de remplissage d'air et le moment de soudure de coussin.

Selon un mode de réalisation, les moyens pour faire une ouverture dans une face de la gaine sont constitués par un couteau fixe à l'encontre duquel une face de la gaine est amenée par mise en pression préalable de la réserve d'air par une plaque de pression reliée à des moyens de déplacement, disposée en amont des moyens d'ouverture, de remplissage et de soudure la faisant se perforer.

Dans une autre version, la machine comporte un moyen de coupe de la gaine relié à des moyens de déplacement qui vient perforer une face de la gaine après que, comme dans le cas précédent, la plaque de pression ait créé une pression dans la réserve d'air donnant à la bulle ainsi formée une résistance suffisante pour permettre au moyen de coupe de couper, l'autre face de la gaine étant suffisamment écartée par l'air contenu dans la bulle pour ne pas etre coupée.

Pour l'utilisation en automatique de la machine, la réserve d'air étant établie, l'opérateur sélectionne le nombre de coussins, leur longueur, leur pourcentage de gonflement, et obtient un coussin ou un chapelet de coussins à la dimension exacte de ses besoins, en ayant choisi au départ la largeur de gaine plastique nécessaire et l'épaisseur en microns requise. Concernant le moyen de soudure : pour économiser le mécanisme nécessaire à rattraper l'allongement du fil ou des fils dans le cas de soudures couplées, et pour éviter le remplacement fréquent de ces fils ainsi que celui de la matière anti-collage disposée de part et d'autre de la gaine, on peut utiliser une double barre de soudure, avec une résistance incorporée controlée en température, revetue d'une matière anti-collage sur les parties soudantes, barre de soudure dont l'allongement du à la chaleur sera permis grace à des fenetres latérales pratiquées dans le système de guidage du déplacement des dites barres de soudure perpendiculairement à la gaine, la faisant se déplacer notamment de haut en bas une protection, amovible, est interposée entre le bloc de soudure de la gaine, lorsque le dit bloc est écarté et s'efface à l'instant de la soudure, évitant une surchauffe du plastique.

L'invention va etre décrite ci-après en référence aux dessins joints qui représentent respectivement :

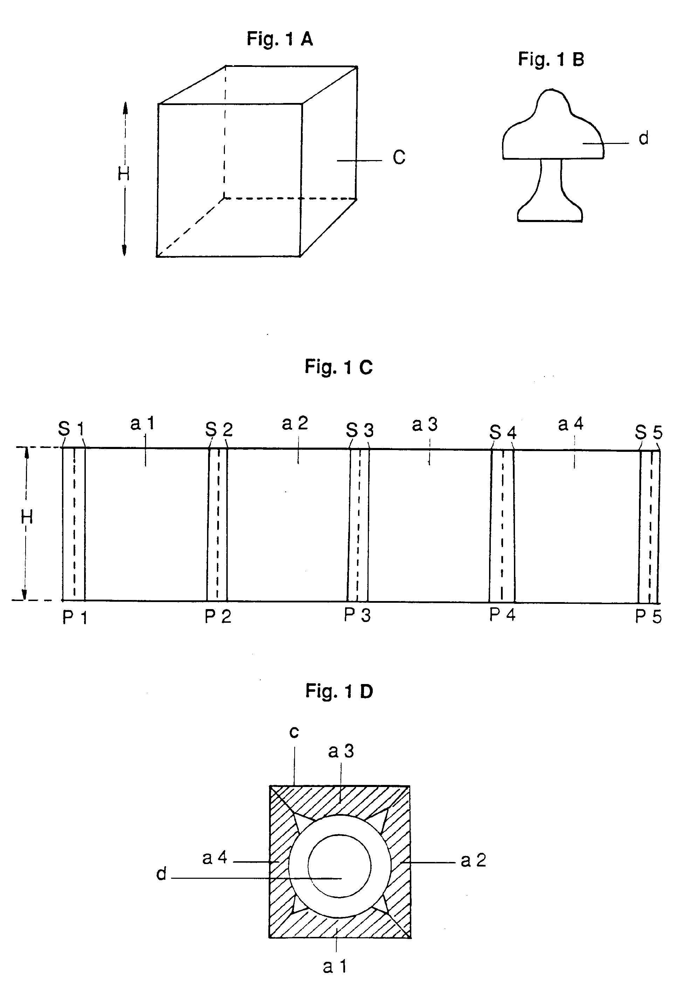

Figure 1A = une représentation d'un contenant (c) de hauteur H
Figure 1B = l'objet (d) à disposer et à protéger dans le contenant (c)
Figure 1C = un chapelet de coussins remplis d'air (a1), (a2), (a3), (a4) de hauteur H correspondant à la hauteur du contenant (c) avec leurs doubles soudures (s1), (s2), (s3), (s4) et (s5) de part et d'autre, entre lesquelles sont disposées les prédécoupes (p1), (p2), (p3), (p4) et (p5).
Figure 1D : l'objet (d) à protéger, entouré et protégé par un chapelet de coussins remplis d'air (a1), (a2), (a3), (a4) à l'intérieur du contenant (c).

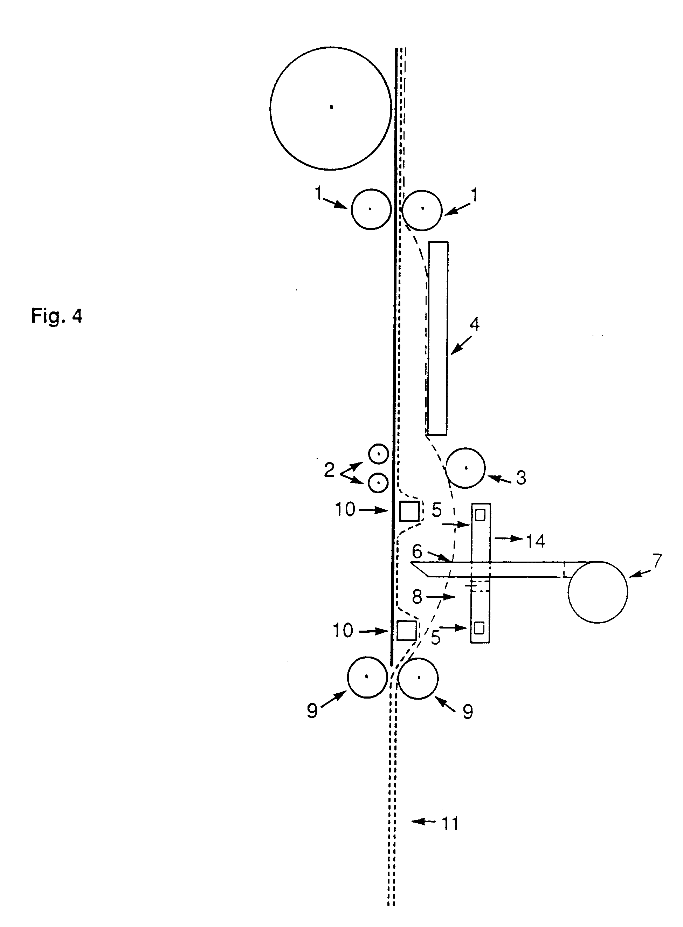

Figures 2 à 7 : des vues de la machine lors des différentes étapes de réalisation de coussins respectivement :

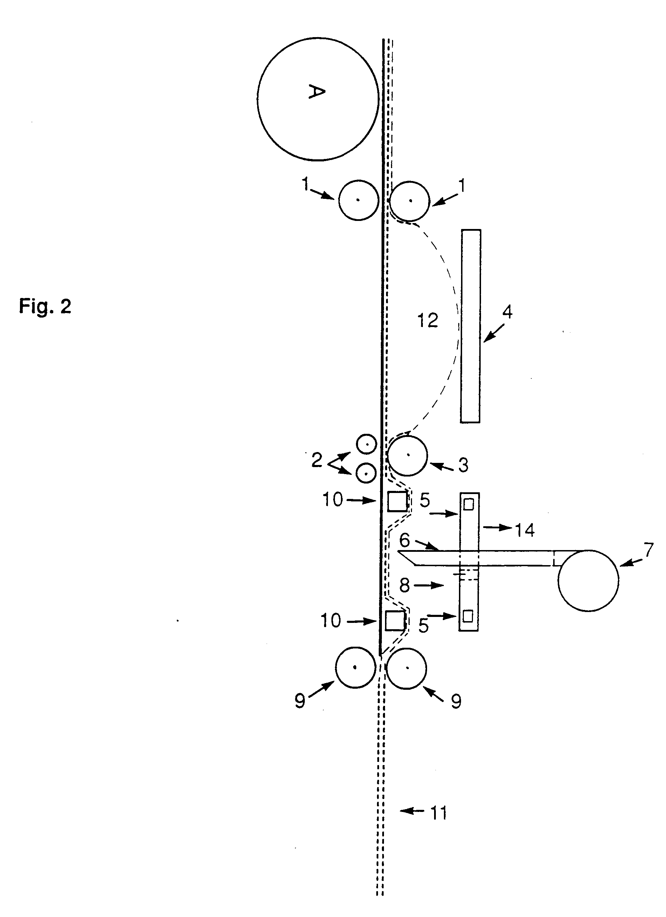

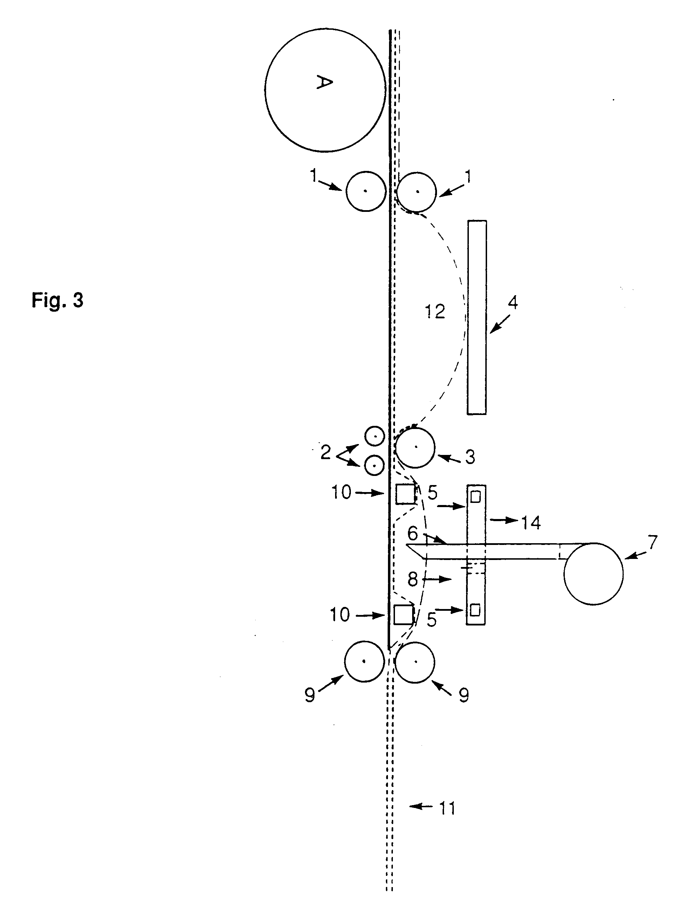

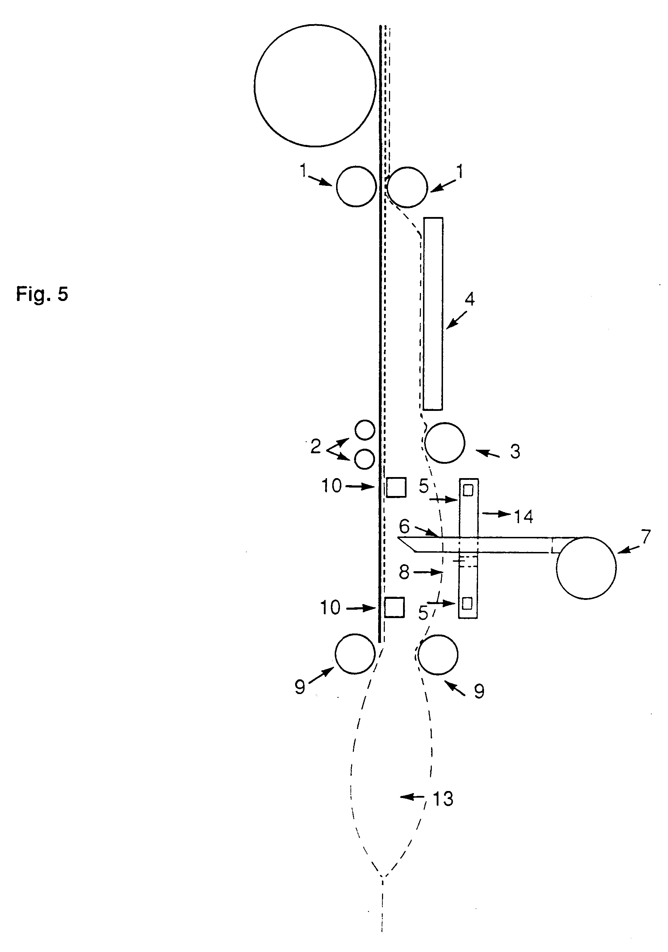

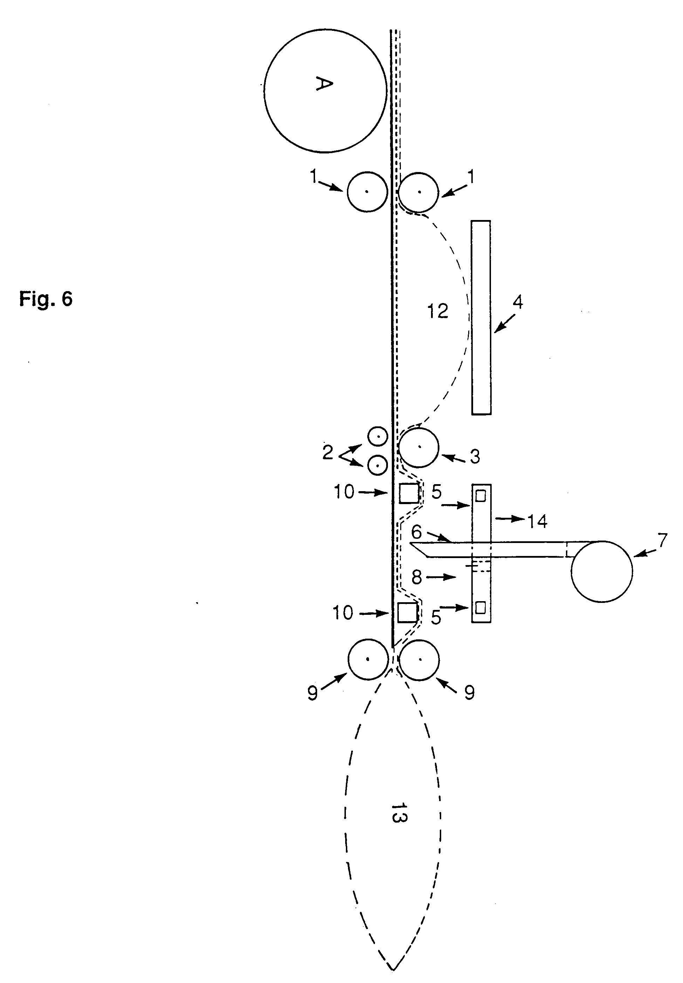

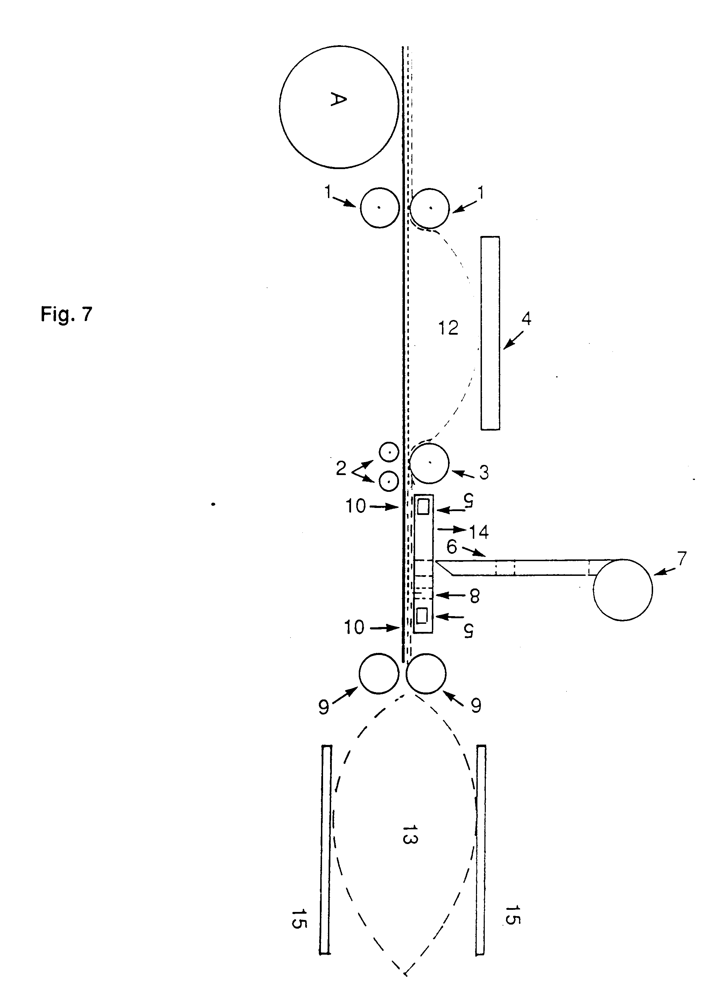

La machine comprend des rouleaux entraineurs (1), des rouleaux intermédiaires de rétention (2 et 3), un moyen de pression (4), 2 rubans chauffants pour les soudures (5), un moyen creux formant couteau (6) relié à une turbine d'air (7), une molette de prédécoupe en pointillé (8), deux rouleaux entraineurs (9), deux supports de contre-ruban chauffant disposés sous la gaine (10), une gaine (11), avec réserve d'air (12), un cadre (14) supportant les deux rubans ou barres de soudure (5) ainsi que la molette de prédécoupe (8). Les moyens électromécaniques (moteurs, cames, guidage) ou de commande ne sont pas représentés (fonctionnement connu). La machine fonctionne selon le processus suivant :
les rouleaux entraineurs supérieurs (1) et inférieurs (9) entrainent la gaine (11) dans sa dimension voulue, la réserve d'air (12) entre les rouleaux intermédiaires (2et3) et les rouleaux inférieurs (9) (Fig. 2). Ce faisant la réserve d'air ainsi transférée (15) (Fig. 3) se trouve en contact avec le moyen creux formant couteau (6) incisant une seule face de la gaine, ce moyen creux relié à une turbine ou source d'air comprime envoie de l'air sous pression permettant de créer une force de pénétration dans la gaine, celle - ci se trouve gonflée dans les deux positions Aval (13) et Amont (12)(Fig.5). Le rouleau intermédiaire (3) s'abaisse et le moyen de pression (4) se relève permettant de reconstituer la réserve d'air originelle (12), dans le meme temps les rouleaux entraineurs (9) se rapprochent empechant l'air de partir et mettant ainsi en forme le futur coussin (13) (Fig. 6). La partie de la gaine entre les rouleaux intermédiaires (2 et 3) et les rouleaux (9) se dégonfle lors de l'arret de la turbine et permet aux deux surfaces de la gaine de se rapprocher jusqu'à se joindre, le cadre (4) supportant les rubans de soudure (5) s'abaisse (Fig. 7) permettant aux rubans d'exercer une pression égale sur toute la longueur du fait que ces rubans viennent épouser les supports de contre-ruban (10). La molette de prédécoupe (8) se déplaçant dans le sens de la largeur de la gaine permet à la dite gaine un maintien partiel suffisant entre les deux coussins et de pouvoir continuer à etre entrainée par les rouleaux (9)(Fig. 6).

Dans l'utilisation de matière plastique non soudable par impulsion thermique (PVC etc. ) les éléments de soudure sont remplacés par un système de soudure haute fréquence connu en soi ou par tout autre procédé (laser, ultra-son, etc.).

Les applications de cette invention sont multiples et s'adressent plus particulièrement à l'industrie de l'emballage calage et conditionnement.

## Revendications

1. Procédé de réalisation d'éléments gonflables appelés coussins destinés au calage de protection d'objets divers et au remplissage d'espaces contenus par rapport à un contenant, caractérisé en ce qu'il consiste : à prendre une gaine (11) souple en matière plastique étanche soudable d'une largeur supérieure au besoin pour tenir compte de la modification due au gonflement, à souder l'extrémité libre aval de ladite gaine, à placer la longueur désirée de gaine entre au moins deux moyens de limitation et de contrôle de remplissage (15), à pratiquer une ouverture dans une des deux faces de la gaine au-delà de la longueur utile définie du coussin, sur au moins une partie de la largeur, à introduire de l'air par ladite ouverture pour remplir à son pourcentage prévu le coussin, tout en obturant temporairement la gaine en amont de ladite ouverture à l'aide de moyens de rétention (1,2,3), à réaliser une soudure étanche de fermeture en aval de ladite ouverture et à réaliser une prédécoupe au moins partielle dans la zone de ladite ouverture permettant la séparation aisée du coussin réalisé (13) ou du dernier coussin d'un chapelet.

2. Procédé selon la revendication 1, caractérisé en ce qu'il consiste à effectuer une soudure simultanée à la fin d'un premier coussin et au début du suivant par une double soudure (5) située de part et d'autre de l'ouverture de remplissage et de prédécoupe.

3. Procédé selon l'une quelconque des revendications 1 et 2, caractérisé en ce qu'il consiste, préalablement à la réalisation de la première soudure, à introduire de l'air dans ladite gaine (11), à maintenir cette réserve d'air (12) dans la gaine par lesdits moyens de rétention (1) situés en amont de la première soudure et de la zone d'ouverture de gaine, qui se ferme dès que l'air est introduit, à faire une première soudure étanche, à l'extrémité libre de la gaine, parallèle à la largeur de la gaine et dans le plan de celle-ci, à reconstituer la réserve d'air (12) à chaque gonflement d'un nouveau coussin faciliant ainsi la coupe d'une seule des parois de la gaine, l'envoi d'air étant réalisé conjointement avec le remplissage d'air de chaque coussin, le maintien de l'air de réserve dans la gaine étant assuré par lesdits moyens de rétention (1) situé en amont de la zone de coupe.

4. Procédé selon la revendication 1, caractérisé en ce qu'il consiste à effectuer à l'extrémité de la gaine une première soudure parallèlement à la largeur de la gaine et dans le plan de ladite gaine et d'effectuer, à la longueur choisie, la deuxième soudure à angle droit par raport au plan initial de la gaine formant ainsi un coussin de forme tétraédrique du genre "Berlingot".

5. Procédé selon l'une quelconque des revendications 1 à 4, caractérisé en ce qu'il consiste à effectuer une soudure double au milieu d'un coussin déjà formé, dont le coefficient de remplissage aura été réduit pour tenir compte de la réalisation de ladite double soudure qui est faite à angle droit par rapport au plan des soudures dudit coussin, formant ainsi deux nouveaux coussins de forme "Berlingot" qui sont sensiblement de moitié de la taille du coussin d'origine.

6. Machine pour la mise en oeuvre du procédé selon l'une quelconque des revendications précédentes du type comportant des moyens de déroulement et d'entraînement (1, 9) d'un rouleau (A) de gaine (11), des moyens de soudure (5) de la gaine à son extrémité libre aval, des moyens de coupe de la gaine et des moyens d'introduction d'air dans la gaine, caractérisée en ce qu'elle comporte en outre des moyens (6) permettant de réaliser une ouverture sur l'une des faces de la gaine, reliés auxdits moyens (7) d'introduction d'air, dans ladite gaine, par ladite ouverture, des moyens transversalement déplaçables (15) pouvant délimiter un volume servant à la limitation de remplissage disposés en aval des moyens de réalisation d'ouverture et de remplissage et des moyens de rétention (2, 3) pour obturer temporairement ladite gaine en amont de ladite ouverture.

7. Machine selon la revendication 6, caractérisée en ce qu'elle comporte en outre en amont des moyens de soudure (5) des moyens de rétention de réserve d'air (2 et 3) reliés à des moyens d'amenée en appui sur la gaine entre le moment de remplissage et le moment de soudure.

8. Machine selon la revendication 6, caractérisée en ce que les moyens de réalisation de l'ouverture sont constitués d'une couteau fixe (6) à l'encontre duquel une face de la gaine est amenée par mise en pression préalable de la réserve d'air (12) par une plaque de pression (4) reliée à des moyens de déplacement, disposée en amont des moyens d'ouverture, de remplissage et de soudure, la faisant s'autoperforer.

9. Machine selon la revendication 6, caractérisée en ce que les moyens de réalisation de l'ouverture sont constitués d'un couteau (6) relié à des moyens de déplacement qui vient perforer une face de la gaine (11) après que la plaque de pression (4) ait créé une pression dans la réserve d'air (12) créant ainsi une résistance suffisante pour la pénétration du moyen formant couteau.

10. Machine selon la revendication 6, caractérisée en ce qu'elle est programmable pour créer sur le lieu de travail les volumes de calage et de remplissage nécessaires pour le calage et la protection de tout objet à l'intérieur de son contenant.

## Patentansprüche

1. Verfahren zur Herstellung von aufblasbaren Kissen, welche der positionsmäßigen Fixierung verschiedener Objekte und zum Ausfüllen vorhandener Hohlräume in Bezug auf einen Behälter dienen, dadurch **gekennzeichnet**, daß eine aus einem luftundurchlässigen Kunststoffmaterial bestehende verschweißbare Hülle (11) verwendet wird, welche im Hinblick auf die sich durch eine Aufblasung ergebende Verformung eine den Erfordernissen größere Breite besitzt, daß das auf der Abgabeseite befindliche Ende der Hülle verschweißt wird, daß die gewünschte Länge der Hülle zwischen wenigstens zwei der Begrenzung und der Steuerung des Aufblasvorgangs dienenden Elementen (15) eingelegt wird, daß in eine der beiden Wandungen der Hülle über die nützliche Länge des Kissens hinaus und wenigstens in einem Teil der Breite eine Öffnung eingebracht wird, daß in diese Öffnung Luft eingeführt wird, um das Kissen bis zu einem vorgegebenen Maße zu füllen, während zur gleichen Zeit kurzzeitig die Hülle auf der Zuführseite der Öffnung mit Hilfe von Rückhaltemitteln (1, 2, 3) geschlossen gehalten wird, daß auf der Abgabeseite der Öffnung eine dichte Verschlußnaht hergestellt wird, und daß im Bereich der Öffnung wenigstens ein teilweiser Abschneidvorgang durchgeführt wird, welcher eine leichte Trennung des hergestellten Kissens (13) bzw. des letzten Kissens einer Kissenkette gestattet.

2. Verfahren nach Anspruch 1, dadurch gekennzeichnet, daß im Hinblick auf das Ende eines ersten Kissens und den Anfang eines folgenden Kissens eine doppelte Schweißnaht (5) hergestellt wird, welche zum Teil auf der einen Seite und zum Teil auf der anderen Seite der Lufteinführöffnung und der Vorabschneidstelle angeordnet ist.

3. Verfahren nach Anspruch 1 oder 2, dadurch gekennzeichnet, daß vor der Herstellung der ersten Schweißnaht Luft in die Hülle (11) eingeleitet wird, daß die dadurch gebildete Luftreserve (12) innerhalb der Hülle (11) mit Hilfe von Rückhaltemitteln (1) festgehalten wird, die auf der Zuführseite der ersten Schweißnaht und des Bereiches der in die Hülle eingebrachten Öffnung angeordnet sind, welche sich verschließt, sobald durch dieselbe Luft eingeführt wird, daß eine erste abdichtende Schweißnaht am freien Ende der Hülle parallel zur Breite der Hülle und innerhalb der Ebene derselben eingebracht wird, wodurch bei jedem Aufblasvorgang eines neuen Kissens die betreffende Luftreserve (12) erneuert wird, was den Einschneidvorgang in die eine der Wandungen der Hülle erleichtert, wobei die Zufuhr der Luft gleichzeitig mit der Luftauffüllung jedes Kissens erfolgt, und wobei die Aufrechterhaltung der Luftreserve innerhalb der Hülle durch diese Rückhaltemittel (1) gewährleistet wird, welche auf der Zuführseite des Schneidbereiches angeordnet sind.

4. Verfahren nach Anspruch 1, dadurch gekennzeichnet, daß am Ende der HÜlle eine erste Schweißnaht parallel zur Breite der Hülle und in der Ebene derselben hergestellt wird, daß in einem gewissen Abstand eine zweite Schweißnaht unter einem rechten Winkel in Bezug auf die ursprüngliche Ebene der Hülle hergestellt wird, so daß auf diese Weise ein tetraederförmiges Kissen zur Herstellung gelangt.

5. Verfahren nach einem der Ansprüche 1 bis 4, dadurch gekennzeichnet, daß im mittleren Bereich eines entsprechend weniger stark aufgeblasenen Kissens eine doppelte Schweißnaht hergestellt wird, welche unter einem rechten Winkel in Bezug auf die Ebene der Schweißnähte des Kissens liegt, wodurch zwei tetraederförmige Kissen hergestellt werden, welche in Bezug auf das ursprüngliche Kissen in etwa die halbe Größe aufweisen.

6. Vorrichtung zur Durchführung des Verfahrens nach einem der vorangegangenen Ansprüche, bei welcher Abroll und Antriebsmittel (1, 9) für die von einer Rolle (A) abgezogene Hülle (11), Schweißmittel (5) für die Verschweißung der Hülle am Abgabeende, ferner Schneidmittel für die Hülle sowie Mittel zur Einführung von Luft in die Hülle vorgesehen sind, dadurch **gekennzeichnet**, daß dieselbe zusätzlich Mittel (6) aufweist, mit welchen innerhalb einer der Wandungen der Hülle eine Öffnung einbringbar ist, und welche mit den Luftzuführmitteln (7) derart verbunden ist, daß durch diese Öffnung eine Einführung von Luft in die Hülle erfolgen kann, und daß auf der Abströmseite der Mittel zur Herstellung der Öffnung und der Einfüllung von Luft und den Rückhaltemitteln (2, 3) zu kurzzeitiger Verschließung der Hülle auf der Zuführseite der Öffnung in Querrichtung verschiebbare Mittel (15) vorgesehen sind, mit welchen eine Begrenzung der Füllung der Hülle erfolgt.

7. Vorrichtung nach Anspruch 6, dadurch gekennzeichnet, daß auf der Zuführseite der Schweißmittel (5) Rückhaltemittel (2, 3) für die Luftreserve vorgesehen sind, welche mit den Auflagemitteln auf der Hülle (11) zwischen dem Zeitpunkt der Füllung und dem Zeitpunkt der Verschweißung verbunden sind.

8. Vorrichtung nach Anspruch 6, dadurch gekennzeichnet, daß die Mittel zur Herstellung der Öffnung durch ein starres Messer (6) gebildet sind, gegen welches die eine Wandung der Hülle (11) durch Druckbeaufschlagung der Luftreserve (12) mit Hilfe einer Druckplatte (4) gedrückt wird, welche mit Betätigungsmitteln verbunden ist, die auf der Zuführseite der die Öffnung und die Füllung und die Verschweißung durchführenden Mittel angeordnet ist, wodurch ein selbsttätigendes Aufschneiden der Hülle erreicht wird.

9. Vorrichtung nach Anspruch 6, dadurch gekennzeichnet, daß die Mittel zur Herstellung der Öffnung ein mit den hin- und herbewegbaren Mitteln verbundenen Messer (6) ist, welches die eine Wandung der Hülle (11) perforiert, nachdem die Druckplatte (4) innerhalb der Luftreserve (12) einen Druck erzeugt hat, auf Grund welchem ein zur Penetration durch das Messer ausreichender Widerstand erzeugt ist.

10. Vorrichtung nach Anspruch 6, dadurch gekennzeichnt, daß dieselbe programmierbar ist, um an Ort und Stelle die Volumina und den erforderlichen Füllungsgrad der Kissen einstellen zu können, um auf diese Weise beliebige Gegenstände innerhalb eines Behälters festhalten und schützen zu können.

## Claims

1. Method for producing inflatable elements called cushions intended for the protective wedging of various objects and for filling spaces contained with respect to a container characterized in that it consists: in taking a flexible sheath (11) made of weldable leaktight plastic whose width is greater than required to take account of the modification due to inflation, in welding the downstream free end of the said sheath, in placing the desired length of sheath between at least two means for limiting and controlling filling (15), in making an opening in one of the two faces of the sheath beyond the defined useful length of the cushion, over at least part of the width, in introducing air through the said opening to fill the cushion to the intended percentage, whilst temporarily plugging the sheath upstream of the said opening with the aid of retaining means (1, 2, 3), in producing a leaktight closure weld downstream of the said opening and in producing at least a partial precut in the zone of the said opening allowing easy separation of the cushion (13) produced, or of the last cushion of a string.

2. Method according to Claim 1, characterized in that it consists in making a weld simultaneously at the end of a first cushion and at the start of the next by means of a double weld (5) located on either side of the filling and precut opening.

3. Method according to either one of Claims 1 and 2, characterized in that it consists, prior to producing the first weld, in introducing air into the said sheath (11), in maintaining this reserve of air (12) in the sheath by means of the said retaining means (1) located upstream of the first weld and of the sheath opening zone, which closes as soon as the air is introduced, in making a first leaktight weld at the free end of the sheath parallel to the width of the sheath and in the plane of the latter, in reconstituting the reserve of air (12) each time a new cushion is inflated, thus facilitating the cutting of just one of the walls of the sheath, the sending of air being produced in conjunction with the filling of air of each cushion, the air reserve being maintained in the sheath by the said retaining means (11) located upstream of the cutting zone.

4. Method according to Claim 1, characterized in that it consists in making, at the end of the sheath, a first weld parallel to the width of the sheath and in the plane of the said sheath and in making, at the chosen length, the second weld at right angles with respect to the initial plane of the sheath thus forming a cushion of tetrahedral shape of the "humbug" type.

5. Method according to any one of Claims 1 to 4, characterized in that it consists in making a double weld at the middle of an already-formed cushion, the coefficient of filling of which will have been reduced to take into account the production of the said double weld which is formed at right angles with respect to the plane of the welds of the said cushion, thus forming two new cushions of "humbug" shape which are substantially half the size of the original cushion.

6. Machine for implementing the method according to any one of the preceding claims of the type including means (1, 9) for unrolling and driving a roll (A) of sheath (11), means (5) for welding the sheath at its downstream free end, means for cutting the sheath and means for introducing air into the sheath, characterized in that it further includes means (6) making it possible to produce an opening on one of the faces of the sheath, connected to the said means (7) for introducing air, into the said sheath, via the said opening, means (15) which can be displaced transversely and are capable of delimiting a volume serving to limit the filling located downstream of the means for producing the opening and for filling and retaining means (2, 3) for temporarily plugging the said sheath upstream of the said opening.

7. Machine according to Claim 6, characterized in that it further includes upstream of the welding means (5) air reserve retaining means (2 and 3) connected to means for bringing to bear on the sheath between the moment of filling and the moment of welding.

8. Machine according to Claim 6, characterized in that the means for producing the opening consist of a fixed cutter (6) against which one face of the sheath is brought by pressurizing the air reserve (12) beforehand by means of a pressure plate (4) connected to displacement means arranged upstream of the opening, filling and welding means, making it perforate automatically.

9. Machine according to Claim 6, characterized in that the means for producing the opening consist of a cutter (6) connected to displacement means which perforates one face of the sheet (11) after the pressure plate (4) has created a pressure in the air reserve (12) thus creating sufficient resistance for the penetration of the means forming a cutter.

10. Machine according to Claim 6, characterized in that it is programmable so as to create, at the workplace, the wedging and filling volumes necessary for wedging and protecting any object inside its container.
